# EUROPEAN PATENT APPLICATION

(11) **EP 4 749 623 A1**
(43) Date of publication of application: **27.05.2026**
(21) Application number: 25215473.7
(22) Date of filing: 13.11.2025
(51) Int. Cl.: G11C 7/10, G06F 21/55, G06F 21/75

(54) **RANDOM ANALOG-TO-DIGITAL CONVERTER COMPUTE CYCLE MANAGEMENT FOR AN ANALOG IN-MEMORY COMPUTATION PROCESSING SYSTEM**

(30) Priority: 20.11.2024 US 202463722703 P; 07.11.2025 US 202519382501
(71) Applicant: STMicroelectronics International N.V., 1228 Plan-les-Ouates, Geneva (CH)
(72) Inventor: CHAWLA, Nitin, 201304 Noida (IN); RAWAT, Harsh, 121006 Faridabad (IN); AYODHYAWASI, Manuj, 201304 Noida (IN)
(74) Representative: Casalonga

(57) **Abstract**

Computational weight data for an in-memory computation operation is stored in a column of memory cells (14). The in-memory computation operation is executed by actuating word lines (WL) connected to the column of memory cells (14) in response to feature data of the in-memory computation operation. An analog signal generated on a bit line of the column is converted, during a converter computation cycle, a digital signal. That digital signal is processed to generate an output of the in-memory computation operation. A randomization signal is generated and applied to control application of a randomized variation to the converter computation cycle. The processing of the digital signal includes adjusting the digital signal to remove error introduced by the random variation applied to the converter computation cycle. The applied random variation affects the power waveform of the in-memory computation device making it more difficult for a power-based side channel attack to succeed.

## Description

### BACKGROUND

An in-memory computation (IMC) processing system stores information in the bit cells of a memory array and performs calculations at the bit cell level. An example of a calculation performed by an IMC processing system is a multiply and accumulate (MAC) operation where an input array of numbers (referred to as the feature or coefficient data) are multiplied by an array of computational weights stored in the memory and the products are added together to produce an output array of numbers.

By performing these calculations at the bit cell level in the memory, the IMC processing system does not need to move data back and forth between a memory device and a computing device. Thus, the limitations associated with data transfer bandwidth between devices are obviated and the computation can be performed with lower power consumption.

An IMC processing system includes a circuit that utilizes a memory array formed by a plurality of memory cells arranged in a matrix format. Each memory cell is programmed to store a bit of the computational weight data (also referred to as kernel data) for an in-memory compute operation. In an implementation, each bit of the computational weight data has either a logic "1" value or a logic "0" value which is represented, for example, by a logic state programmed into the memory cell.

It is often the case that the computational weight data is highly valuable and proprietary. Persons of bad intent often try to extract the computational weight data from the IMC processing system using an extraction technique known in the art as a side channel attack which evaluates power consumption during operation of the IMC processing system. There is a need in the art to provide the IMC processing system with protections against side channel attack efforts to decode the details of the computational weight data stored in the memory array.

### SUMMARY

An embodiment provides a circuit comprising: a memory array including a plurality of memory cells arranged in a matrix with plural rows and plural columns, each row including at least one word line connected to memory cells in the row, and each column including at least one bit line connected to memory cells in the column; wherein the memory cells store computational weight data for an in-memory computation operation; a word line driver circuit for each row having an output configured to drive the word line of the row; a row decoder circuit configured to actuate a plurality of the word line driver circuits in response to feature data of the in-memory computation operation; analog-to-digital converter circuitry configured, during a converter computation cycle, to convert analog signals generated on the bit lines of the columns to digital signals; and digital computation circuitry configured for processing the digital signals from the analog-to digital converter circuitry.

The control circuit is configured to generate a randomization signal that is input to the analog-to-digital converter circuitry to control application of a randomized variation to the converter computation cycle.

The digital computation circuitry also receives the randomization signal. The processing of the digital signals by the digital computation circuitry comprises adjusting the digital signals to remove error introduced by the random variation applied to the converter computation cycle of the analog-to-digital converter circuitry.

In embodiments, the circuit further comprises one or more of the following features, or any combination thereof:
- the randomized variation is dependent on a randomization signal value generated by a random number generator circuit, and/or
- each memory cell is a static random access memory (SRAM) cell, and/or
- the SRAM cell is one of a 6T-type cell or an 8T-type cell, and/or
- the analog-to-digital converter circuitry comprises a time-to-digital converter based analog-to-digital converter circuit and the randomized variation is applied to a compute cycle of the time-to-digital converter, and/or
- the time-to-digital converter comprises:
   a voltage-to-time converter circuit configured to generate a start signal and a stop signal where a difference in time between the start and stop signals is dependent on a signal level of the analog signal generated on the bit line;
   a randomization circuit configured to apply a random variation to the difference in time that is dependent on a value of the randomization signal; and
   a converter circuit configured to convert the difference in time to the digital signal and/or
- the randomization circuit applies a randomized delay to the start signal, and/or
- the randomization circuit applies a randomized delay to the stop signal, and/or
- the time-to-digital converter comprises:
   a charge controlled oscillator configured to generate an oscillator clock signal having a frequency dependent on a signal level of the analog signal generated on the bit line;
   a randomization circuit configured to apply the random variation to a duration of the timer on signal that is dependent on a value of the randomization signal; and
   a counter circuit actuated by a timer on signal to count pulses of the oscillator clock signal, and/or
- said plural columns include at least one dummy column; and
   a bitline precharge circuit coupled to the at least one bit line of the at least one dummy column, wherein said bitline precharge circuit is configured to precharge said at least one bit line of the at least one dummy column to a randomly selected one of a first voltage level and a second voltage level, different from the first voltage level, in connection with execution of the in-memory computation operation, and/or
- the first voltage level is a supply voltage level and the second voltage level is a ground voltage level, and/or
- the random selection of one of the first voltage level and second voltage level by the bitline precharge circuit is controlled by a precharge signal having a randomly selected logic state, and/or
- the precharge signal is generated by a random number generator circuit, and/or
- said digital computation circuitry is further configured to generate a decision output for the in-memory computation operation in response to the adjusted digital signals, and/or
- the control circuit is configured to split execution of the in-memory computation operation for a given column of memory cells into a plurality of in-memory computation cycles; and
   wherein the processing circuit is configured to bind the digital signals generated in response to said plurality of in-memory computation cycles after adjusting each digital signal to remove error introduced by the random variation applied to the converter computation cycle, and/ or
- the control circuit splits execution of the in-memory computation operation in response to a sparsity of computational weight data indicating a condition of a dense weight for the computational weight data of the in-memory computation operation stored in the given column. Embodiments also provides a method comprising: executing an in-memory computation operation where computational weight data for the in-memory computation operation is stored in a column of memory cells by actuating a plurality of the word lines connected to the column of memory cells in response to feature data of the in-memory computation operation; converting, during a converter computation cycle, an analog signal generated on a bit line of the column to a digital signal; and processing the digital signal.

The method further comprises generating a randomization signal applied to control application of a randomized variation to the converter computation cycle.

The processing of the digital signal comprises adjusting the digital signal to remove error introduced by the random variation applied to the converter computation cycle.

In embodiments, the method further comprises one or more of the following features, or any combination thereof:
- the randomized variation is dependent on a randomization signal value generated by a random number generator circuit, and/or
- converting comprises performing a time-to-digital converter based analog-to-digital conversion and the randomized variation is applied to a compute cycle of the time-to-digital converter and/or
- performing the time-to-digital converter based analog-to-digital conversion comprises:
   generating a start signal;
   generating a stop signal;
   wherein a difference in time between the start and stop signals is dependent on a signal level of the analog signal generated on the bit line; and
   converting the difference in time to the digital signal; and
   wherein the randomized variation to the converter computation cycle comprises a random variation applied to the difference in time that is dependent on a random value, and/or
- the random variation is a randomized delay applied to the start signal, and/or
- the random variation is a randomized delay applied to the stop signal, and/or
- the method, further comprises:
   performing the time-to-digital converter based analog-to-digital conversion comprises:
   generating an oscillator clock signal having a frequency dependent on a signal level of the analog signal generated on the bit line; and
   in response to a timer on signal, counting pulses of the oscillator clock signal; and
   wherein the randomized variation to the converter computation cycle comprises a random variation applied to a duration of the timer on signal that is dependent on a random value, and/or
- the method, further comprises:
   splitting the executing of the in-memory computation operation for the column of memory cells into a plurality of in-memory computation cycles; and
   wherein processing the digital signal comprises, binding the digital signals generated in response to said plurality of in-memory computation cycles after adjusting each digital signal to remove error introduced by the random variation applied to the converter computation cycle, and/or
- splitting is performed in response to a sparsity of computational weight data indicating a condition of a dense weight for the computational weight data of the in-memory computation operation stored in the column.

### BRIEF DESCRIPTION OF THE DRAWINGS

For a better understanding of the embodiments, reference will now be made by way of example only to the accompanying figures in which:
Figure 1 is a schematic diagram of a circuit supporting analog in-memory computation processing;
Figure 2 is a circuit diagram of a 6T static random access memory (SRAM) cell used in the circuit of Figure 1;
Figure 3 is a circuit diagram of an 8T SRAM cell used in the circuit of Figure 1;
Figures 4A, 4B and 4C are circuit diagrams for bitline precharge circuits used in the circuit of Figure 1;
Figure 5A is a block diagram of a time-to-digital converter (TDC) based analog-to-digital converter (ADC) circuit used in the circuit of Figure 1;
Figure 5B is a circuit diagram for a voltage-to-time converter (VTC) circuit of the TDC-based ADC of Figure 5A;
Figure 5C shows operational waveforms for the VTC circuit;
Figure 5D is a circuit diagram for a time-to-digital converter (TDC) circuit of the TDC-based ADC of Figure 5A; and
Figure 6 is a block diagram of a TDC based ADC circuit used in the circuit of Figure 1.

### DETAILED DESCRIPTION OF THE DRAWINGS

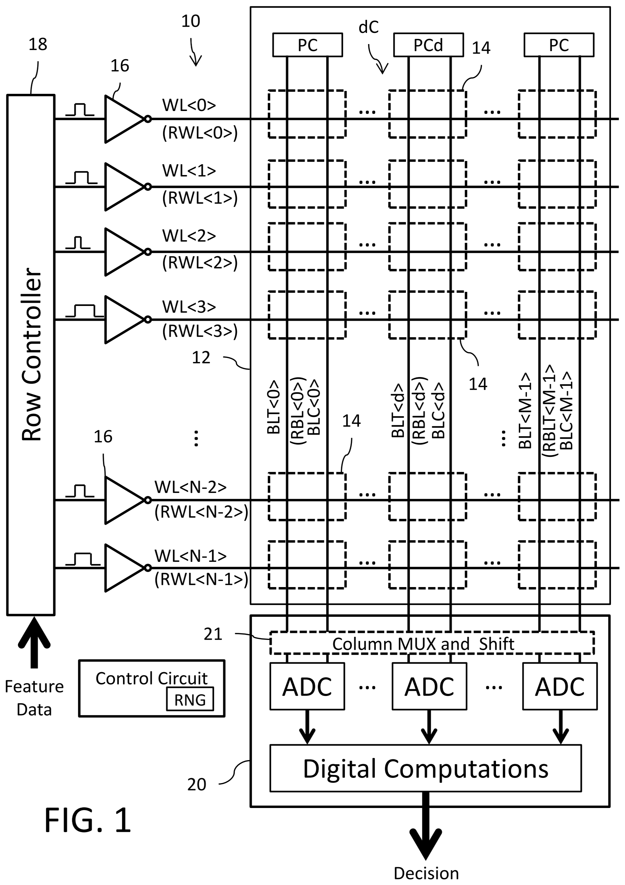

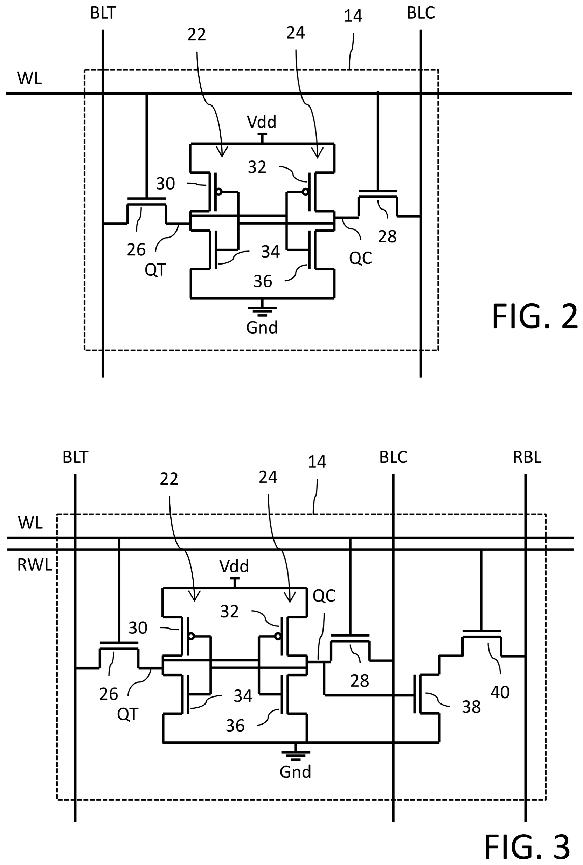

Reference is now made to Figure 1 which shows a schematic diagram of a circuit 10 supporting analog in-memory computation processing. The circuit 10 utilizes a memory circuit including a static random access memory (SRAM) array 12 formed by standard 6T SRAM memory cells 14 (see, Figure 2) arranged in a matrix format having N rows and M columns. As an alternative, a standard 8T memory cell (see, Figure 3) or an SRAM with a similar functionality and topology could instead be used. Each memory cell 14 is programmed to store a bit of a computational weight or kernel data for an in-memory compute operation. In this context, the in-memory compute operation is understood to be a form of a high dimensional Matrix Vector Multiplication (MVM) supporting multi-bit weights that are stored in multiple bit cells of the memory. The group of bit cells (in the case of a multibit weight) can be considered as a virtual synaptic element. Each bit of the computational weight has either a logic "1" or a logic "0" value.

Each SRAM cell 14 includes a word line WL and a pair of complementary bit lines BLT and BLC. The 8T-type SRAM cell would additionally include a read word line RWL and a read bit line RBL. The cells 14 in a common row of the matrix are connected to each other through a common word line WL (and through the common read word line RWL in the 8T-type implementation). The cells 14 in a common column of the matrix are connected to each other through a common pair of complementary bit lines BLT and BLC (and through the common read bit line RBL in the 8T-type implementation). Each word line WL, RWL is driven by a word line driver circuit 16 which may be implemented as a CMOS driver circuit (for example, a series connected p-channel and n-channel MOSFET transistor pair forming a logic inverter circuit). The word line signals applied to the word lines, and driven by the word line driver circuits 16, are generated from feature data input to the in-memory computation circuit 10 and controlled by a row controller circuit 18. A column processing circuit 20 senses the analog signals on the pairs of complementary bit lines BLT and BLC (and/or on the read bit line RBL) for the M columns, converts the analog signals to digital signals, performs digital calculations on the digital signals and generates a decision output for the in-memory compute operation.

It will be understood that the circuit 10 may instead use a different type of memory cell, for example, any form of a bit cell, storage element or synaptic element. As a non-limiting example, consideration is made for the use of a non-volatile memory (NVM) cell such as, for example, magnetoresistive RAM (MRAM) cell, Flash memory cell, phase change memory (PCM) cell or resistive RAM (RRAM) cell). In the following discussion, focus is made on the implementation using an 8T-type SRAM cell 14, but this is done by way of a non-limiting example, understanding that any suitable memory element could be used (e.g., a binary (two level) storage element or an m-ary (multi-level) storage element).

Although not explicitly shown in Figure 1, it will be understood that the circuit 10 further includes conventional row decode, column decode, and read-write circuits known to those skilled in the art for use in connection with writing bits of data (for example, the computational weight data) to, and reading bits of data from, the SRAM cells 14 of the memory array 12. This operation is referred to as a conventional memory access mode and is distinguished from the analog in-memory compute operation discussed above.

The row controller circuit 18 receives the feature data for the in-memory compute operation and in response thereto performs the function of selecting which ones of the read word lines RWL<0> to RWL<N-1> are to be simultaneously accessed (or actuated) in parallel during an analog in-memory compute operation, and further functions to control application of pulsed signals to the word lines in accordance with that in-memory compute operation. Figure 1 illustrates, by way of example only, the simultaneous actuation of all N word lines with the pulsed word line signals, it being understood that in-memory compute operations may instead utilize a simultaneous actuation of fewer than all rows of the SRAM array. The analog signals (for example, a voltage, or a current converted from the voltage) developed on the read bit lines RBL are dependent on the logic state of the bits of the computational weight stored in the memory cells 14 of the corresponding column and the width(s) of the pulsed word line signals applied to those memory cells 14.

The implementation illustrated in Figure 1 shows an example in the form of a pulse width modulation (PWM) for the applied word line signals for the in-memory compute operation dependent on the received feature data. The use of PWM or period pulse modulation (PTM) for the applied word line signals is a common technique used for the in-memory compute operation based on the linearity of the vector for the multiply-accumulation (MAC) operation. The pulsed word line signal format can be further evolved as an encoded pulse train to manage block sparsity of the feature data of the in-memory compute operation. It is accordingly recognized that an arbitrary set of encoding schemes for the applied word line signals can be used when simultaneously driving multiple word lines. Furthermore, in a simpler implementation, it will be understood that all applied word line signals in the simultaneous actuation may instead have a same pulse width.

A control circuit controls mode operations of the circuitry within the circuit 10.

As previously noted, the array 12 includes M columns of memory cells 14. One or more of the columns of memory cells 14 is designed as a dummy column dC (the remaining columns referred to as normal columns). In the implementation shown in Figure 1, one such dummy column is provided by the complementary bit lines, memory cells and read bit lines indicated by the suffix <d>. Although this dummy column dC is shown as being located between the first (suffix <0>) and last (suffix <M-1>) columns of the array, this is by example only as it will be understood that the dummy column may be included in the array at any desired column location. Furthermore, although only one dummy column dC is shown in the array, this is by example only as it will be understood that two or more dummy columns may be included in the array. When two or more dummy columns dC are included, those dummy columns may be located adjacent to each other or spread apart from each other in the array. The location of the one or more dummy columns dC of memory cells 14 in the array may be randomly selected by the circuit designer, and the control circuit would be programmed with configuration data identifying the number and location of the dummy columns dC. In a preferred implementation, less than 10% of the total M number of columns would be designated as dummy columns in order to limit the impact of dummy column presence on circuit area. In some implementations, dummy columns dC may be dynamically allocated in the array in order to permit the columns to otherwise be part of system bandwidth in scenarios where the dummy column functionality is not required (for example, where there is a reduced security concern with respect to the stored data).

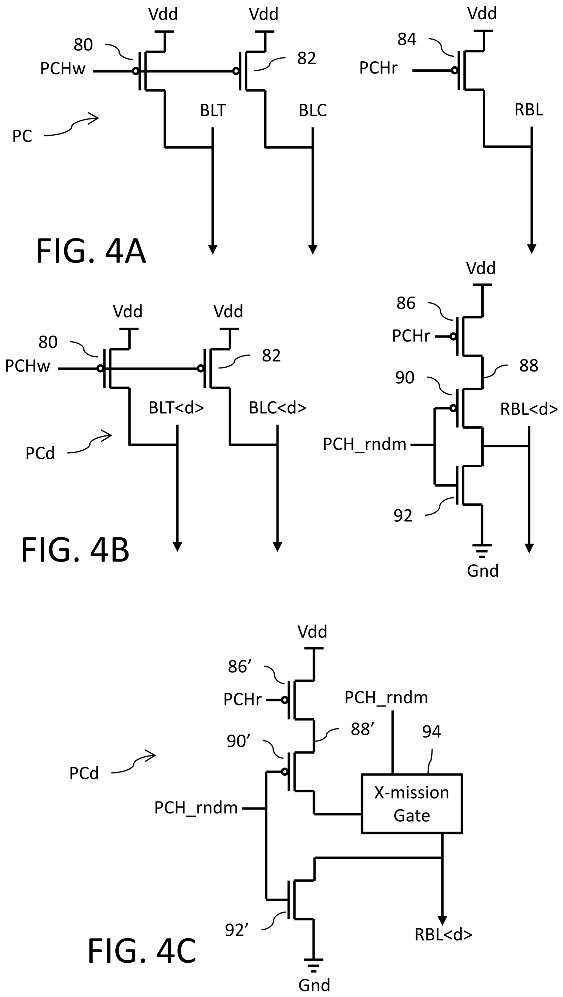

The memory array 12 further includes a bit line precharge circuit PC coupled to the complementary bit lines BLT, BLC and read bit line RBL of each normal (i.e., not dummy) column of the array. This precharge circuit PC operates to precharge a desired voltage level (for example, supply voltage Vdd) to the complementary bit lines BLT, BLC and read bit line RBL in advance of performing a data access (write or read or IMC) operation. Figure 4A shows a circuit diagram for an example precharge circuit PC. The precharge circuit PC includes a first p-channel MOS transistor 80 having a source coupled to the supply voltage Vdd and a drain coupled to the bit line BLT, a second p-channel MOS transistor 82 having a source coupled to the supply voltage Vdd and a drain coupled to the bit line BLC, and a third p-channel MOS transistor 84 having a source coupled to the supply voltage Vdd and a drain coupled to the read bit line RBL. The gates of the transistors 80, 82 are driven by a write mode precharge control signal PCHw that is asserted (logic low) by the control circuit at the beginning of (i.e., in connection with the execution of) a memory access operation to write data into the memory array. The gate of transistor 84 is driven by a read/IMC mode precharge control signal PCHr that is asserted (logic low) by the control circuit at the beginning of (i.e., in connection with the execution of) a memory access operation to read data from the memory array or at the beginning of (i.e., in connection with the execution of) each in-memory computation operation.

The memory array 12 further includes a dummy bit line precharge circuit PCd coupled to the dummy complementary bit lines BLT, BLC and dummy read bit line RBL of each dummy column dC of the array. This precharge circuit PCd operates to precharge a desired voltage level (for example, supply voltage Vdd) to the complementary bit lines BLT, BLC in advance of performing a data access write operation. The circuit PCd further operates to randomly precharge the dummy read bit line RBL to one of a first voltage level (for example, supply voltage Vdd) and a second voltage level (for example, ground voltage Gnd in advance of performing a data read operation or an in-memory computation operation. Figure 4B shows a circuit diagram for an example precharge circuit PCd. The precharge circuit PCd includes a first p-channel MOS transistor 80 having a source coupled to the supply voltage Vdd and a drain coupled to the dummy bit line BLT<d> and a second p-channel MOS transistor 82 having a source coupled to the supply voltage Vdd and a drain coupled to the dummy bit line BLC<d>. The gates of the transistors 80, 82 are driven by a write mode precharge control signal PCHw that is asserted (logic low) by the control circuit at the beginning of (i.e., in connection with the execution of) a memory access operation to write data into the memory array. The precharge circuit PCd further includes a third p-channel MOS transistor 86 having a source coupled to the supply voltage Vdd and a drain coupled to an intermediate node 88, a fourth p-channel MOS transistor 90 having a source coupled to the intermediate node 88 and a drain coupled to the dummy read bit line RBL<d>, and an n-channel MOS transistor 92 having a drain coupled to the intermediate node 88 and a source coupled to the ground voltage Gnd. The gate of the transistor 86 is driven by the read/IMC mode precharge control signal PCHr that is asserted (logic low) by the control circuit at the beginning of (i.e., in connection with the execution of) a memory access operation to read data from the memory array or at the beginning of (i.e., in connection with the execution of) each in-memory computation operation. The gates of the transistors 90 and 92 are driven by a precharge control signal PCH_rndm at the beginning of a memory access operation to read data from the memory array or at the beginning of (i.e., in connection with the execution of) each in-memory computation operation. The logic state ("1" or "0") of the precharge control signal PCH_rndm is randomly generated by the control circuit using a random number generator (RNG) circuit, based on a generated random signal Rndm, at each instance of an access to the memory (read or IMC). When the precharge control signal PCH_rndm is logic "0", and the precharge control signal PCHr is asserted (logic low), the dummy read bit line RBL<d> is precharged to the supply voltage Vdd and the dummy column dC contributes to the power consumption during the in-memory computation operation. On the other hand, when the precharge control signal PCH_rndm is logic "1", and the precharge control signal PCHr is asserted (logic low), the dummy read bit line RBL<d> is precharged to the ground voltage Gnd and the dummy column dC does not contribute to the power consumption during the in-memory computation operation. Because the logic state of the precharge control signal PCH _rndm is randomly selected (using the random number generator RNG of the control circuit), there is a corresponding random participation of the dummy column dC in the in-memory computation operation, and this introduces a random variation in the power waveform of the in-memory computation device making it more difficult for a power-based side channel attack to succeed in discerning the stored computational weight data.

The digital computation circuit of the column processing circuit 20 may include a column multiplexing (MUX) and shift functionality 21 that could select for the computation processing only the outputs from the normal columns (i.e., the masking off output from the one or more dummy columns dC to ensure those outputs do not contribute the calculated decision). In cases with limited or shared ADC resources in the column processing circuit 20, this column multiplexing and shift functionality 21 would be located between the array 12 and the inputs to the ADC circuits in order to select only output from the normal columns for input to the ADC circuits. Because the ADC resources are sharable by multiple columns, the in-memory computation operation outputs from the array 12 will need to be shifted (right or left) to compensate for the presence of the dummy column dC.

It will be noted that an effect of forcing the dummy read bit line RBL<d> to ground voltage Gnd acts like a masking of the stored data bit since the bit logic value is forced to logic low and this will lead to an output of logic low when multiplied by the feature date for the in-memory computation operation. The effect is then to mask the computation operations of the dummy column dC.

An alternative configuration for the precharge circuit PCd for the dummy read bit line RBL<d> is shown in Figure 4C. A first p-channel MOS transistor 86' has a source coupled to the supply voltage Vdd and a drain coupled to the intermediate node 88'. A second p-channel MOS transistor 90' has a source coupled to the intermediate node 88' and a drain coupled to the input of a transmission gate circuit 94. An output of the transmission gate circuit 94 is coupled to the read bit line RBL. An n-channel MOS transistor 92' has a drain coupled to the read bit line RBL and a source coupled to the ground voltage Gnd. The gate of the transistor 86' is driven by the read/IMC mode precharge control signal PCHr that is asserted (logic low) in connection with defining the default state of the read bit line RBL before beginning (e.g., the execution of) a memory access operation to read data from the memory array or before beginning (e.g., the execution of) each in-memory computation operation. The gates of the transistors 90' and 92' are driven by a precharge control signal PCH_rndm at or before beginning either a memory access operation to read data from the memory array or perform an in-memory computation operation. The precharge control signal PCH_rndm is also applied as an operational control signal for the transmission gate circuit 94. The logic state ("1" or "0") of the precharge control signal PCH_rndm is randomly generated using a random number generator (RNG) circuit at each instance of an access to the memory (read or IMC). The column can be configured for operation by enabling operation of (i.e., turning ON) the transmission gate circuit 94. However, when the transmission gate circuit 94 is turned OFF, the column is masked and the read bit line RBL is driven to the logic low state. When in the enabled configuration, with the precharge control signal PCH_rndm at logic "0", and the precharge control signal PCHr asserted (logic low), the dummy read bit line RBL is precharged to the supply voltage Vdd and the dummy column dC contributes to the power consumption during the read or in-memory computation operation. On the other hand, when the precharge control signal PCH _rndm is logic "1", and the precharge control signal PCHr is asserted (logic low), the dummy read bit line RBL is precharged to the ground voltage Gnd and the dummy column dC does not contribute to power consumption during the read or in-memory computation operation. Because the logic state of the precharge control signal PCH_rndm is randomly selected (using the random number generator RNG), there is a corresponding random participation of the dummy column dC in the in-memory computation operation, and this introduces a random variation in the power waveform of the in-memory computation device making it more difficult for a power-based side channel attack to succeed in discerning the stored computational weight data.

It will be recognized that a characteristic of the analog-based in-memory computation operation is that the weight vector (i.e., the weight data) is stored vertically in a column of memory cells 14 and the feature vector (i.e., the feature data) is applied by the different pulse widths of the word line signals simultaneously across the rows of the memory cells 14. Depending on weight vector size, the complete MAC operation for the analog in-memory computation can be mapped onto one column. The read bit line RBL accumulates the analog signal result of the MAC operation in the analog domain (either as a voltage or current), and this analog signal is converted to a digital signal by the analog-to-digital converter (ADC) coupled to the column. Notwithstanding the introduction of dummy columns dC as noted above, with the stationary nature of the weight storage in the normal columns there remains a risk of side channel attack through power analysis as the ADC circuit performs its computation to generate a digital signal output for processing by the digital computation circuit.

A compact analog-to-digital conversion strategy for use by the ADC circuit of the column processing circuit 20 is based on a time-to-digital converter (TDC).

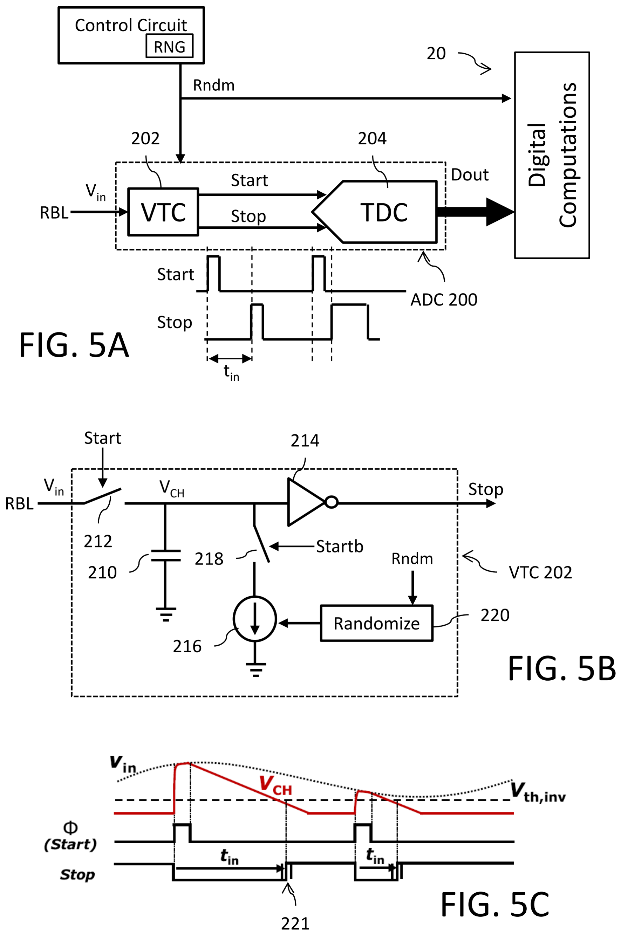

Reference is now made to Figure 5A which shows a block diagram of a time-to-digital converter (TDC) based analog-to-digital converter (ADC) circuit 200 used in the circuit of Figure 1. The ADC circuit 200 includes a voltage-to-time converter (VTC) circuit 202 having an input coupled to the column, for example to the read bit line RBL. The VTC circuit 202 outputs a start signal and a stop signal. A difference in time tᵢₙ (i.e., a time duration) between the leading edges of the start and stop signals is indicative of a signal level (for example, voltage level) of the analog signal present on the read bit line RBL at a sampling time corresponding to pulsing of the start signal. The timing diagrams in Figure 5A show the waveforms for the start and stop signal for two different samples of the analog signal present on the read bit line RBL of the normal column (the first having a relatively higher voltage level and the second having a relatively lower voltage level). The ADC circuit 200 further includes a time-to-digital converter (TDC) circuit 204 that converts each time tᵢₙ duration to a corresponding digital value Dout.

Figure 5B shows is a circuit diagram for the VTC circuit 202. An integration capacitor 210 has a first terminal coupled through a first switch 212 to receive the analog signal present on the read bit line RBL of the normal column (for example, selected for connection by the column shift circuit 21) and a second terminal coupled to a reference (for example, ground) node. The first switch 212 is actuated to close in response to assertion of the Start signal at a sampling time instant. The first terminal of the capacitor 210 is further connected to the input of a logic inverter circuit 214. The output of the logic inverter circuit 214 generates the stop signal. A discharge current generated by current generator 216 is selectively sunk from the first terminal of the capacitor 210 (at the input of the logic inverter circuit 214) in response to actuation of a second switch 218. The second switch 218 is actuated to close in response to assertion of a logical inversion Startb of the Start signal.

Figure 5C shows operational waveforms for the VTC circuit 202. At the assertion of the Start signal (which comprises a periodic signal ϕ such as a sampling clock signal), the switch 212 closes, the Stop signal at the output of inverter 214 transitions to logic low, a sampling operation is performed and the capacitor 212 is charged to a voltage V_{CH} corresponding to an input voltage level Vᵢₙ for the analog signal present on the read bit line RBL. When the Start signal is deasserted, the switch 212 opens ending the sampling operation and the logical inversion Startb of the Start signal is asserted to cause switch 218 to close. The current generated by current generator 216 then begins to discharge the capacitor 212. When the voltage V_{CH} on the capacitor 212 discharges to a level below the switching threshold Vt_{h,inv} of the inverter 214, the output of inverter 214 transitions to logic high.

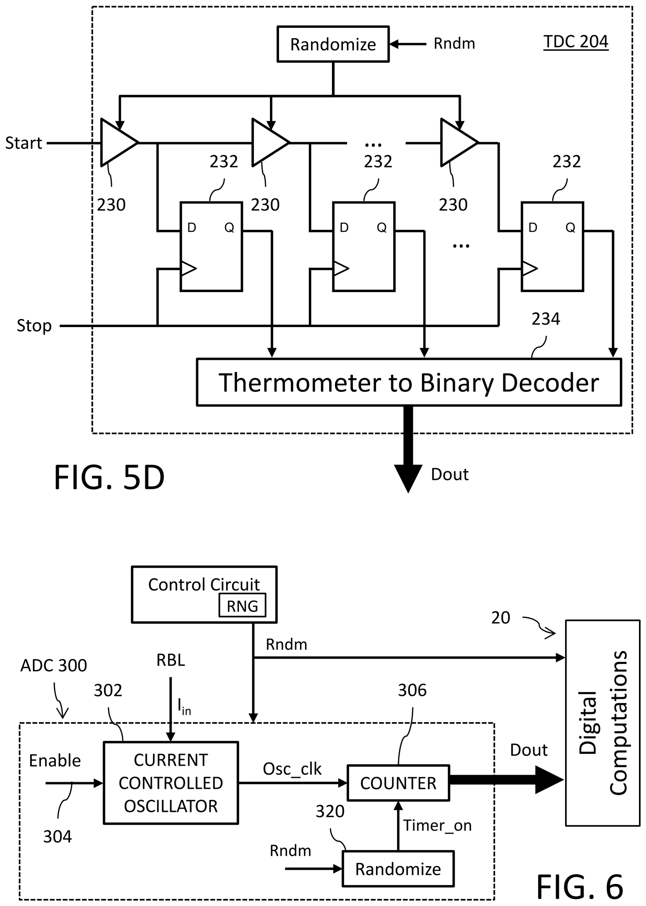

Figure 5D is a circuit diagram for the TDC circuit 204. The Start signal is applied to the input of a series connection of unit time delay circuits 230. The tapped output of each time delay circuit 230 is fed to the data input (D) of a corresponding D-type flip-flop 232. The clock inputs of the D-type flip-flops 232 receive the Stop signal. The data outputs (Q) from the D-type flip-flops 232 are input to a thermometer to binary decoder circuit 234 which converts the data bits from the data outputs (Q) (in thermometer code) to the ADC data output Dout (in binary code).

With reference once again to Figure 5A, the control circuit includes a random number generator (RNG) circuit that generates a randomization signal Rndm (see, also, Figure 1). This randomization signal Rndm is used to randomize the internal computation cycles of the ADC circuit 200. The number of compute cycles exercised by one or more of the ADC circuits 200 coupled to the normal columns are randomly increased/decreased (with respect to a nominal number of compute cycles), and this introduces a random variation in the power waveform of the in-memory computation device making it more difficult for a power-based side channel attack to succeed in discerning the stored computational weight data.

One mechanism for accomplishing this internal computation cycle randomization for the ADC circuit 200 is to use a randomization circuit 220 to apply a random variation, dependent on the value of the randomization signal Rndm, in the magnitude of the discharge current generated by current generator 216. The random variation of the discharge current magnitude has an effect on the slope of the discharging of the voltage V_{CH} and thus there is a corresponding random variation introduced in the time tᵢₙ duration which triggers the generation of the stop signal. This random variation of the stop signal is indicated by the spread of edge transitions for the Stop signal shown at reference 201 in Figure 5C. The random variation of in the timing for the edge of the Stop signal must be accounted for in subsequent processing of the digital output signal Dout, and thus the randomization signal Rndm is also input, along with the digital output signal Dout, to the digital computation circuit. Responsive to the value of the randomization signal Rndm, the digital computation circuit adjusts the value of the received digital output signal Dout to remove the error introduced by the random shift in time the location of the leading edge of the Stop signal, to generate a corrected digital signal for further processing.

Another mechanism for accomplishing this internal computation cycle randomization for the ADC circuit 200 is to use a randomization circuit 220 to apply a random variation, dependent on the value of the randomization signal Rndm, in the time delay applied to the Start signal by one or more of the delay circuits 230. The random variation of the time delay for the Start signal has an effect on the magnitude of the thermometer code value stored by the D-type flip-flops 232 responsive to the time tᵢₙ duration. This random variation must be accounted for in subsequent processing of the digital output signal Dout, and thus the randomization signal Rndm is also input, along with the digital output signal Dout, to the digital computation circuit. Responsive to the value of the randomization signal Rndm, the digital computation circuit adjusts the value of the received digital output signal Dout to remove the error introduced by the random shift in time the location of the leading edge of the Stop signal, to generate a corrected digital signal for further processing.

Reference is now made to Figure 6 which shows a block diagram of a time-to-digital converter (TDC) based analog-to-digital converter (ADC) circuit 300 used in the circuit of Figure 1. The ADC circuit 300 includes a current controlled oscillator (CCO) circuit 302 having an input coupled to the column, for example to the read bit line RBL. The CCO oscillator circuit 302, when enabled by ADC enable signal 304, generates an oscillator output clock signal Osc_clk having a frequency that is dependent on the analog signal present on the read bit line RBL (shown here as an analog bit line current Iᵢₙ) of the normal column. A counter circuit 306, for example in the form of a ripple counter clocked by the signal Osc_clk, is enabled by a timer on control signal Timer_on to count a number of pulses (cycles) of the clock signal Osc_clk which occur during a measurement time period (or duration) having a length set by the signal Timer_on. The counted number of pulses is output as the ADC data output Dout.

The control circuit includes a random number generator (RNG) circuit that generates a randomization signal Rndm (see, also, Figure 1). This randomization signal Rndm is used to randomize the internal computation cycles of the ADC circuit 300. The number of compute cycles exercised by the ADC circuits 300 coupled to the columns (both normal and dummy) are randomly increased/decreased (with respect to a nominal number of compute cycles), and this introduces a random variation in the power waveform of the in-memory computation device making it more difficult for a power-based side channel attack to succeed in discerning the stored computational weight data.

This randomization of the internal computation cycles for the ADC circuit 300 is accomplished through use of a randomization circuit 320 to apply a random increase or decrease, dependent on the value of the randomization signal Rndm, to the length (duration) of the measurement time period set by the signal Timer_on. This effectively applies a random variation in the measurement time period (duration) for the ADC computation operation. This random variation must be accounted for in subsequent processing of the digital output signal Dout, and thus the randomization signal Rndm is also input, along with the digital output signal Dout, to the digital computation circuit. Responsive to the value of the randomization signal Rndm, the digital computation circuit adjusts the value of the received digital output signal Dout to remove the error introduced by the random variation in the measurement time period length, to generate a corrected digital signal for further processing.

In an example, the randomization circuit 320 may comprise a reference current generator configured to generate a reference current I_{ref} where there is a random variation introduced in the magnitude of that reference current dependent on the value of the randomization signal Rndm (similar to the current generator 216). The reference current I_{ref} is applied to a current controlled oscillator which outputs a clock signal Clk_ref applied to the input of counter circuit. The signal Timer _on is generated at the output of the counter circuit. The length (duration) of the measurement time period set by the signal Timer _on is dependent on the duration of time between reset of the counter circuit and count overflow of the counter circuit in response to the clock signal Clk_ref. The randomization of the reference current magnitude thus introduces a random variation in the duration of the Timer_on signal.

In an embodiment, the reference current I_{ref} may be generated at the bit line of one of the dummy columns Cd.

A random increase in the length (duration) of the measurement time period set by the signal Timer_on can alternatively be accomplished by introducing random dummy cycles at the end of the Timer_on signal generation. The elongation of the Timer_on signal length is randomly selected based on the value of the randomization signal Rndm. This can be accomplished, for example, by introducing a random delay in the change of logic state of the Timer_on signal following detection of counter overflow.

The same randomization in the number of compute cycles can be applied to all ADC circuits 200 (for example, coupled to the normal columns). Alternatively, each ADC circuit 200 (for example, coupled to the normal columns) can apply its own unique randomization in the number of compute cycles.

It will be noted that the randomization of the compute cycles of the ADC circuit can also be applied to the ADC circuits which may be coupled to the dummy columns dC of the memory array 12. The compute cycle randomization can be applied to a group of ADC circuits, including to all ADC circuits, within the analog in-memory computation processing circuit 10. The same or different randomization signal Rndm values may be used for the ADC circuits within the group of ADC circuits.

It will also be noted that the sparsity of the weight data stored in each column can be monitored by the control circuit, and a value indicative of the weight data sparsity can be used to determine which ADC circuit, or group of ADC circuits, needs to apply a randomization of compute cycles. In this context, sparsity means how many weights do not carry any information (for example, have a logic value=0). Since the weights are pre known, it is also already known that the number of compute cycles is bounded by the sparsity (where a higher sparsity with more logic 0 values for the weights or no operations which means a need of a lesser number of compute cycles). Sparsity itself can be present in structured or unstructured way in terms of how it is mapped on weights stored in array. So, the intention can be to fix the number of compute cycles for a pre-defined sparsity across columns with varying sparsity which helps in keeping power profile constant around pre-defined sparse limit.

Additionally, this value indicative of the weight data sparsity can indicate a condition of a dense weight for a certain column (i.e., the opposite of being sparse). In such a case, the control circuit can split the in-memory computation operation for that column into two, or more, cycles in order to maintain a desired degree of sparsity for each in-memory computation operation. The digital computation circuit can then merge or bind the data output Dout for the multiple cycles (after any needed removal of error introduced by the random variation in ADC operation due to the randomization signal Rndm).

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A circuit (10), comprising:
a memory array (12) including a plurality of memory cells (14) arranged in a matrix with plural rows and plural columns, each row including at least one word line (WL) connected to memory cells (14) in the row, and each column including at least one bit line (BLT) connected to memory cells (14) in the column;
wherein the memory cells (14) store computational weight data for an in-memory computation operation;
a word line driver circuit (16) for each row having an output configured to drive the word line of the row;
a row decoder circuit configured to actuate a plurality of the word line driver circuits in response to feature data of the in-memory computation operation;
analog-to-digital converter circuitry (ADC) configured, during a converter computation cycle, to convert analog signals generated on the bit lines of the columns to digital signals; and
digital computation circuitry configured for processing the digital signals from the analog-to digital converter circuitry (ADC); and
a control circuit configured to generate a randomization signal that is input to the analog-to-digital converter circuitry (ADC) to control application of a randomized variation to the converter computation cycle; and
wherein the digital computation circuitry also receives the randomization signal and the processing of the digital signals comprises adjusting the digital signals to remove error introduced by the random variation applied to the converter computation cycle of the analog-to-digital converter circuitry (ADC).

2. The circuit of claim 1 or 2, wherein the randomized variation is dependent on a randomization signal value generated by a random number generator circuit.

3. The circuit of any one of claims 1 to 3, wherein each memory cell (14) is a static random access memory (SRAM) cell.

4. The circuit of any one of claims 1 to 3, wherein the analog-to-digital converter circuitry (ADC) comprises a time-to-digital converter based analog-to-digital converter circuit and the randomized variation is applied to a compute cycle of the time-to-digital converter.

5. The circuit of claim 4, wherein the time-to-digital converter comprises:
a voltage-to-time converter circuit configured to generate a start signal and a stop signal where a difference in time between the start and stop signals is dependent on a signal level of the analog signal generated on the bit line;
a randomization circuit configured to apply a random variation to the difference in time that is dependent on a value of the randomization signal; and
a converter circuit configured to convert the difference in time to the digital signal.

6. The circuit of claim 5, wherein the randomization circuit applies a randomized delay to the start signal or to the stop signal.

7. The circuit of claim 4, wherein the time-to-digital converter comprises:
a charge controlled oscillator configured to generate an oscillator clock signal having a frequency dependent on a signal level of the analog signal generated on the bit line;
a randomization circuit configured to apply the random variation to a duration of the timer on signal that is dependent on a value of the randomization signal; and
a counter circuit actuated by a timer on signal to count pulses of the oscillator clock signal.

8. The circuit of any one of claims 1 to 7, wherein said plural columns include at least one dummy column (dC); and
a bitline precharge circuit (PC) coupled to the at least one bit line of the at least one dummy column (dC), wherein said bitline precharge circuit (PC) is configured to precharge said at least one bit line of the at least one dummy column (dC) to a randomly selected one of a first voltage level and a second voltage level, different from the first voltage level, in connection with execution of the in-memory computation operation.

9. The circuit of claim 8, wherein the first voltage level is a supply voltage level (Vdd) and the second voltage level is a ground voltage level (Gnd).

10. The circuit of claim 9, wherein the random selection of one of the first voltage level and second voltage level by the bitline precharge circuit is controlled by a precharge signal having a randomly selected logic state.

11. The circuit of claim 10, wherein the precharge signal is generated by a random number generator (RNG) circuit.

12. The circuit of any one of claims 1 to 11, wherein said digital computation circuitry is further configured to generate a decision output for the in-memory computation operation in response to the adjusted digital signals.

13. The circuit of any one of claims 1 to 12:
wherein the control circuit is configured to split execution of the in-memory computation operation for a given column of memory cells (14) into a plurality of in-memory computation cycles; and
wherein the processing circuit (20) is configured to bind the digital signals generated in response to said plurality of in-memory computation cycles after adjusting each digital signal to remove error introduced by the random variation applied to the converter computation cycle.

14. The circuit of claim 13, wherein the control circuit splits execution of the in-memory computation operation in response to a sparsity of computational weight data indicating a condition of a dense weight for the computational weight data of the in-memory computation operation stored in the given column.

15. A method, comprising:
executing an in-memory computation operation where computational weight data for the in-memory computation operation is stored in a column of memory cells by actuating a plurality of the word lines connected to the column of memory cells in response to feature data of the in-memory computation operation;
converting, during a converter computation cycle, an analog signal generated on a bit line of the column to a digital signal;
processing the digital signal; and
generating a randomization signal applied to control application of a randomized variation to the converter computation cycle; and
wherein processing the digital signal comprises adjusting the digital signal to remove error introduced by the random variation applied to the converter computation cycle.
